(19) Europäisches Patentamt / European Patent Office / Office européen des brevets

(11) **EP 4 335 683 B1**

(12) **EUROPEAN PATENT SPECIFICATION**

(45) Date of publication and mention of the grant of the patent:
**15.04.2026 Bulletin 2026/16**

(21) Application number: **22930139.5**

(22) Date of filing: **19.10.2022**

(51) International Patent Classification (IPC):
*B60L 7/10* (2006.01)    *B60R 16/023* (2006.01)
*B60L 58/10* (2019.01)    *B60L 7/26* (2006.01)
*B60T 7/12* (2006.01)    *B60T 13/74* (2006.01)
*B60L 15/20* (2006.01)    *B60L 58/13* (2019.01)
*B60L 58/15* (2019.01)    *B60T 1/10* (2006.01)
*B60T 13/58* (2006.01)    *F16D 61/00* (2006.01)

(52) Cooperative Patent Classification (CPC):
**B60L 58/13; B60L 7/26; B60L 15/2009;
B60L 15/2045; B60L 58/15; B60T 1/10;
B60T 13/586; F16D 61/00;** B60L 2240/12;
B60L 2240/423; B60L 2240/547; B60L 2240/549;
B60L 2240/647; B60L 2240/66; B60L 2250/12;
(Cont.)

(86) International application number:
**PCT/CN2022/126205**

(87) International publication number:
**WO 2024/021320 (01.02.2024 Gazette 2024/05)**

(54) **ELECTRIC VEHICLE DRIVER-ASSISTANCE ENERGY-SAVING CONTROL SYSTEM AND CONTROL METHOD**

STROMSPARENDES STEUERUNGSSYSTEM ZUR UNTERSTÜTZUNG DES FAHRERS EINES ELEKTROFAHRZEUGS UND STEUERUNGSVERFAHREN

SYSTÈME DE COMMANDE D'ÉCONOMIE D'ÉNERGIE D'AIDE À LA CONDUITE DE VÉHICULE ÉLECTRIQUE ET PROCÉDÉ DE COMMANDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.07.2022 CN 202210876657**

(43) Date of publication of application:
**13.03.2024 Bulletin 2024/11**

(73) Proprietor: **Changzhou Xingyu Automotive Lighting Systems Co., Ltd.**
**Changzhou, Jiangsu 213022 (CN)**

(72) Inventor: **ZHANG, Min**
**Changzhou, Jiangsu 213022 (CN)**

(74) Representative: **Lorenz Seidler Gossel Part. mbB**
**Widenmayerstr. 23**
**80538 München (DE)**

(56) References cited:
CN-A- 109 552 289        CN-A- 110 920 405
CN-A- 110 979 017        CN-A- 112 572 157
CN-A- 112 572 157        CN-A- 115 009 037
CN-B- 109 552 289        CN-B- 110 920 405
DE-A1- 102013 219 345    JP-A- 2004 216 997
JP-B2- 6 756 519         US-A1- 2015 258 897
US-B2- 9 815 373

(52) Cooperative Patent Classification (CPC): (Cont.)
B60L 2250/20; B60L 2260/24; B60L 2260/46;
B60T 2270/604; Y02T 10/72

**Description**

**TECHNICAL FIELD**

The present disclosure relates to a control method of an energy-saving control system for assisted driving of an electric vehicle.

**BACKGROUND**

The market share of electric vehicles is getting increasingly higher, and electric vehicles with an assisted driving function are gradually becoming the mainstream. At present, the energy recovery strategy of electric vehicles with the assisted driving function is the same as the energy recovery strategy of vehicles without the assisted driving function, and even for some vehicles, the energy recovery function is disabled or minimized after the assisted driving function is enabled.

Among existing products, the energy recovery rate of electric vehicles is low after the assisted driving function is enabled, affecting the promotion and development of electric vehicles. Even for some vehicles, the energy recovery function is disabled after some assisted driving functions are enabled, resulting in a waste of resources and a reduced mile range of the vehicle.

JP 2004 216997 A discloses a vehicle brake control apparatus that integrates a precisely controlled alternating cycle between regenerative braking and power generation braking to improve the brake performance and energy efficiency of the vehicle.

Further prior art is known from CN 110 920 405 B, US 2015/258897A1, US 9 815 373 B2, CN 109 552 289 B, CN 112 572 157 A, and JP 6 756519 B2.

**SUMMARY**

The technical problem to be solved by the present disclosure is to overcome the shortcomings of the prior art by providing a control method of an energy-saving control system for assisted driving of an electric vehicle, to optimize an energy recovery function after an assisted driving function of a vehicle is started, and to save energy and increase the mile range of the vehicle as the energy is recovered.

To solve the above technical problems, the present invention provides an energy-saving control system as defined in claim 1. Preferred aspects of the present invention are defined in the dependent claims.

An aspect of the present disclosure provides an energy-saving control system for assisted driving of an electric vehicle, including:

    a motor,
    an exteroceptive sensor, configured to acquire external environment data of the electric vehicle, wherein the external environment data of the electric vehicle includes pedestrian data, lane marking data, and front vehicle data;
    a proprioceptive sensor, configured to acquire driver information;
    an assisted driving system (ADS), configured to process the external environment data of the electric vehicle acquired by the exteroceptive sensor and the driver information acquired by the proprioceptive sensor;
    a vehicle control unit (VCU), configured to receive and process external environment information sent by the ADS;
    a hydraulic braking system, configured to brake the electric vehicle by using a hydraulic pressure;
    a motor control unit (MCU), configured to receive a torque request of the VCU, drive the motor to operate and recover electric energy to obtain recovered electric energy;
    a power battery, configured to provide power for the electric vehicle and store the recovered electric energy; and
    a battery management system (BMS), configured to monitor a status of the power battery and acquire current information,
    wherein the VCU is configured to send a control instruction to the ADS, the BMS, the hydraulic braking system, and the MCU in the energy-saving control system for the assisted driving.

The control method of the energy-saving control system for assisted driving of an electric vehicle according to the present invention comprises:

    step S1: upon completion of power-on start-up and initialization of the electric vehicle, determining whether the electric vehicle enters an assisted driving mode after the driver confirms to enter an assisted driving mode, and performing step S2 if the electric vehicle enters the assisted driving mode, or performing energy recovery according to an original strategy if the electric vehicle does not enter the assisted driving mode;
    step S2: after the electric vehicle enters the assisted driving mode, the ADS identifying and classifying the external environment data of the electric vehicle acquired by the exteroceptive sensor, and based thereon determining an external environment situation of the electric vehicle to obtain a determined external environment situation of the electric vehicle, and transmitting information about the determined external environment situation of the electric vehicle to the VCU;
    step S3: after the electric vehicle enters the assisted driving mode, the ADS obtaining a first braking force distribution influence coefficient $a_1$ according to the driver information acquired by the proprioceptive sensor, and the BMS obtaining a second braking force distribution influence coefficient $a_2$ according to voltage and current information of the power battery acquired by the BMS, and sending the first braking force distribution influence coefficient $a_1$ and the second braking force distribution influence coefficient $a_2$ to the VCU;

step S4: the VCU receiving the first braking force distribution influence coefficient $a_1$ sent by the ADS and the second braking force distribution influence coefficient $a_2$ sent by the BMS, and obtaining a requested braking force f through polynomial fitting, where the requested braking force f is expressed as:

$$f = a_1 * f_{hydraulic} + a_2 * f_{motor}$$

where $f_{hydraulic}$ and $f_{motor}$ are information of a braking force map in an original braking force distribution; and

step S5: in the assisted driving mode, the ADS detecting according to the external environment information of the electric vehicle whether braking is required; when the braking is required, the VCU performing braking force distribution according to a required vehicle speed-based braking response calculation request and the braking force distribution influence weight coefficients $a_1$ and $a_2$; and when the braking is not required, the VCU performing coasting energy recovery according to vehicle information and external road information.

Further, the step S3 specifically includes the following steps:

step S31: after the electric vehicle enters the assisted driving mode, the ADS determining an age, a gender, and a mental state of a driver according to the driver information acquired by the proprioceptive sensor, performing perception fusion and classification, obtaining the first braking force distribution influence coefficient $a_1$, and sending the first braking force distribution influence coefficient $a_1$ to the VCU; and

step S32: after the electric vehicle enters the assisted driving mode, the BMS determining a driving habit of the driver and road smoothness information from the acquired voltage and current information according to a driving status of the electric vehicle, performing fitting to obtain the second braking force distribution influence coefficient $a_2$, and sending the second braking force distribution influence coefficient $a_2$ to the VCU.

Preferably, the first braking force distribution influence coefficient satisfies $a_1 \in [0,1]$.

Preferably, the second braking force distribution influence coefficient satisfies $a_2 \in [0,1]$.

Preferably, the step S5 specifically includes the following steps:

step S51: in the assisted driving mode, when the ADS determines according to the external environment information of the electric vehicle that the braking is required, the ADS sending the required vehicle speed to the VCU, and the VCU distributing hydraulic braking and motor braking according to the required vehicle speed-based braking response calculation request and the braking force distribution influence weight coefficients $a_1$ and $a_2$; and

step S52: in the assisted driving mode, when the ADS determines according to the external environment information of the electric vehicle that the braking is not required, the ADS performing the coasting energy recovery according to the vehicle information and the external road information, and the VCU making a judgment according to information from the ADS and information from the BMS, and sending a motor braking request to the MCU to perform the coasting energy recovery.

Preferably, a precondition for the coasting energy recovery in the step S52 is: making a judgment according to a state of charge (SOC) of the power battery detected by the BMS.

Preferably, braking energy recovery is performed based on the SOC of the power battery is determined according to following strategy:

when the SOC of the power battery is greater than or equal to 95%, no braking energy recovery is performed, i.e., the second brake force distribution influence coefficient $a_2 = 0$;

when the SOC of the power battery is greater than or equal to 80% and is less than 95%, the braking energy recovery is allowed restrictively, i.e., the second brake force distribution influence coefficient $a_2$ is (0.6 to 0.8); and

when the SOC of the power battery is less than 80%, the braking energy recovery is allowed.

By the technical solutions of the present disclosure, it is first determined whether the assisted driving function is enabled. After the driver confirms to enter an assisted driving environment, the ADS is used to calculate a driver influence coefficient according to the driver information acquired by the proprioceptive sensor, a vehicle status coefficient is determined according to current and voltage changes acquired by the BMS during the vehicle driving process, a braking force distribution formula is obtained through fitting, and energy recovery is performed according to braking forces distributed to the MCU in vehicle driving states under different conditions. In the present disclosure, when the electric vehicle is in the assisted driving mode, the energy recovery capability is improved by optimizing the energy recovery function without affecting the driving performance of the vehicle. In the present disclosure, control optimization is implemented through software without requiring any additional hardware, thereby reducing costs.

## BRIEF DESCRIPTION OF THE DRAWINGS

FIG. 1 is a functional block diagram of an energy-saving control system for assisted driving of an electric vehicle according to the present disclosure.

FIG. 2 is a flowchart of a control method of an energy-saving control system for assisted driving of an electric vehicle according to the present disclosure.

FIG. 3 is a flowchart of a strategy for determining a SOC of a power battery according to the present disclosure.

## DETAILED DESCRIPTION OF THE EMBODIMENTS

To make the content of the present disclosure more comprehensible, the present disclosure will be described in further detail below according to specific embodiments and in conjunction with the accompanying drawings.

Embodiment 1

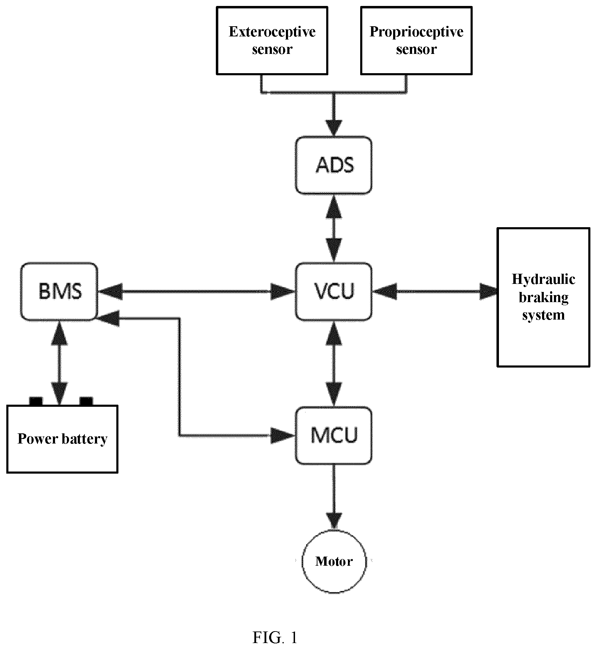

As shown in FIG. 1, this embodiment provides an energy-saving control system for assisted driving of an electric vehicle, including:

an exteroceptive sensor, configured to acquire external environment data of the electric vehicle, where the external environment data of the electric vehicle includes pedestrian data, lane marking data, and front vehicle data;

a proprioceptive sensor, configured to acquire driver information;

an assisted driving system (ADS), configured to process the external environment data of the electric vehicle acquired by the exteroceptive sensor and the driver information acquired by the proprioceptive sensor;

a vehicle control unit (VCU), being a brain of an electric vehicle, and configured to receive and process external environment and vehicle pedestrian information sent by the assisted driving system, and send a control instruction to each module in the energy-saving control system for assisted driving;

a hydraulic braking system, configured to brake the electric vehicle by using a hydraulic pressure;

a motor control unit (MCU), configured to receive a torque request of the vehicle control unit, drive a motor to operate, and recover electric energy;

a power battery, configured to provide power for the electric vehicle and store the recovered electric energy; and

a battery management system (BMS), configured to monitor a status of the power battery and acquire current information.

According to the energy-saving control system for assisted driving of an electric vehicle in this embodiment, first, the ADS is used to process the external and internal environment data acquired by the sensors to analyze whether the assisted driving function is enabled. After the driver confirms to enter an assisted driving environment, the ADS is used to calculate a driver influence coefficient according to the driver information acquired by the proprioceptive sensor, a vehicle status coefficient is determined according to current and voltage changes acquired by the BMS during the vehicle driving process. The vehicle status coefficient is finally sent to the VCU. The VCU obtains a braking force distribution formula through fitting. Finally, energy recovery is performed according to braking forces distributed to the MCU in vehicle driving states under different conditions.

Embodiment 2

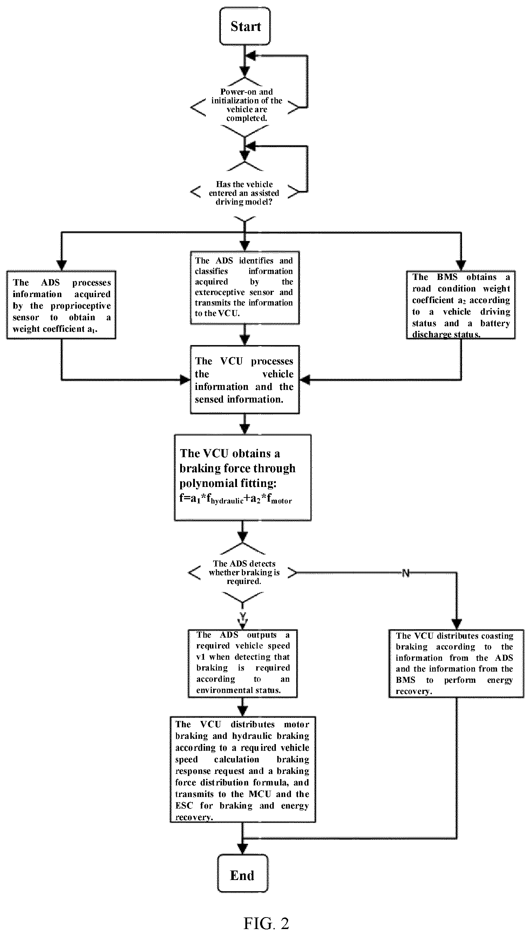

As shown in FIG. 2, this embodiment provides a control method of the energy-saving control system for assisted driving of an electric vehicle, including the following steps.

Step S1. Upon completion of power-on startup and initialization of the electric vehicle, the electric vehicle has no relevant faults, and the electric vehicle is in a normal state. It is determined whether the electric vehicle enters an assisted driving mode. If the electric vehicle enters the assisted driving mode, step S2 is performed. If the electric vehicle does not enter the assisted driving mode, energy recovery is performed according to an original strategy for a non-assisted driving mode.

Step S2: After the electric vehicle enters the assisted driving mode, the ADS identifies and classifies the external environment data of the electric vehicle acquired by the exteroceptive sensor, senses and determines an external environment situation of the electric vehicle, and transmits information about the determined external environment situation of the electric vehicle to the VCU.

Step S3: After the electric vehicle enters the assisted driving mode, the ADS obtains a first braking force distribution influence coefficient $a_1$ according to the driver information acquired by the proprioceptive sensor, and the BMS obtains a second braking force distribution influence coefficient $a_2$ according to acquired voltage and current information, and sends the first braking force distribution influence coefficient $a_1$ and the second braking force distribution influence coefficient $a_2$ to the VCU.

Step S4: The VCU receives the first braking force distribution influence coefficient $a_1$ sent by the ADS and the second braking force distribution influence coefficient $a_2$ sent by the BMS, and obtains a requested braking force f through polynomial fitting, where the requested braking force f is expressed as:

$$f = a_1 * f_{hydraulic} + a_2 * f_{motor}$$

where $f_{hydraulic}$ and $f_{motor}$ are information of a braking force map in an original braking force distribution; and

Step S5: In the assisted driving mode, the ADS detects according to the external environment information of the electric vehicle whether braking is required. When the braking is required, the VCU performs braking force distribution according to a required vehicle speed-based braking response calculation request and the braking force distribution influence weight coefficients $a_1$ and $a_2$. When the braking is not required, the VCU performs coasting energy recovery according to vehicle information and external road information.

Specifically, the step S3 specifically includes the following steps:

Step S31: After the electric vehicle enters the assisted driving mode, the ADS determines an age, a gender, and a mental state of a driver according to the driver information acquired by the proprioceptive sensor, performing perception fusion and classification, obtains the first braking force distribution influence coefficient $a_1$, and sends the first braking force distribution influence coefficient $a_1$ to the VCU. The first braking force distribution influence coefficient satisfies $a_1 \in [0,1]$.

Step S32: After the electric vehicle enters the assisted driving mode, the BMS determines a driving habit of the driver and road smoothness information from the acquired voltage and current information according to a driving status of the electric vehicle, performs fitting to obtain the second braking force distribution influence coefficient $a_2$, and sends the second braking force distribution influence coefficient $a_2$ to the VCU. The second braking force distribution influence coefficient satisfies $a_2 \in [0,1]$.

Specifically, the step S5 specifically includes the following steps:

Step S51: In the assisted driving mode, when the ADS determines according to the external environment information of the electric vehicle that the braking is required, the ADS sends the required vehicle speed to the VCU, and the VCU properly distributes hydraulic braking and motor braking according to the required vehicle speed-based braking response calculation request and the braking force distribution influence weight coefficients $a_1$ and $a_2$, so as to increase the mile range of the vehicle and save energy.

Step S52: In the assisted driving mode, when the ADS determines according to the external environment information of the electric vehicle that the braking is not required, the ADS performs coasting energy recovery according to the vehicle information and the external road information, and the VCU makes a judgment according to information from the ADS and information from the BMS, and sends a motor braking request to the MCU. Energy recovery also exists when the electric vehicle is in a non-braking state. Such energy recovery is called coasting energy recovery. To be specific, the motor sends a braking request for coasting energy recovery when the driver does not step on the brake. The braking request is not initiated manually. The coasting energy recovery can increase the mile range of the vehicle and save energy. For example, non-braking of the motor means that the motor has a positive acceleration to provide a positive torque. When braking is required, the motor provides a negative torque.

In addition, to protect the power battery and prevent overcharge from affecting the service life and safety of the power battery, a precondition for the coasting energy recovery in the step S52 is: making a judgment according to a state of charge (SOC) of the power battery detected by the BMS.

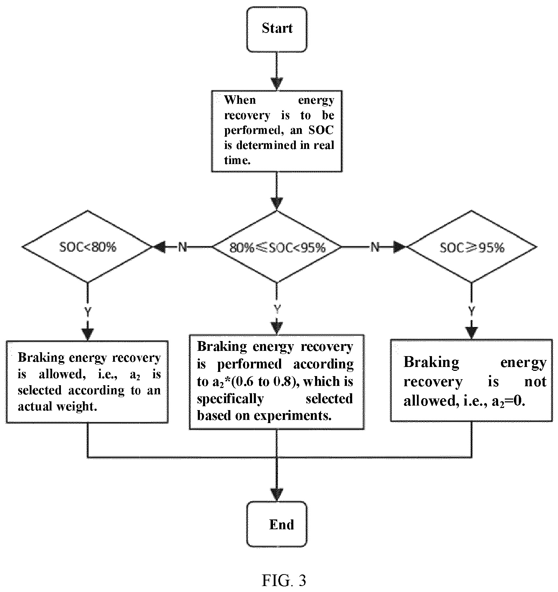

Specifically, as shown in FIG. 3, the SOC of the power battery is determined according to following strategy:

when the SOC of the power battery is greater than or equal to 95%, no braking energy recovery is performed to prevent overcharging of the power battery, i.e., the second brake force distribution influence coefficient $a_2 = 0$;

when the SOC of the power battery is greater than or equal to 80% and is less than 95%, the braking energy recovery is allowed restrictively, i.e., the second brake force distribution influence coefficient $a_2$ is (0.6 to 0.8); and

when the SOC of the power battery is less than 80%, the braking energy recovery is allowed, and the second brake force distribution influence coefficient $a_2$ is selected according to an actual weight.

**Claims**

1. A control method of an energy-saving control system for assisted driving of an electric vehicle, the energy-saving control system for the assisted driving of the electric vehicle comprises:

a motor;
an exteroceptive sensor, configured to acquire external environment data of the electric vehicle, wherein the external environment data of the electric vehicle includes pedestrian data, lane marking data, and front vehicle data;
a proprioceptive sensor, configured to acquire driver information;
an assisted driving system (ADS), configured to process the external environment data of the electric vehicle acquired by the exteroceptive sensor and the driver information acquired by the proprioceptive sensor;

a vehicle control unit (VCU), configured to receive and process external environment information sent by the ADS;

a hydraulic braking system, configured to brake the electric vehicle by using a hydraulic pressure;

a motor control unit (MCU), configured to receive a torque request of the VCU, drive the motor to operate and recover electric energy to obtain recovered electric energy;

a power battery, configured to provide power for the electric vehicle and store the recovered electric energy; and

a battery management system (BMS), configured to monitor a status of the power battery and acquire current information;wherein the VCU is configured to send a control instruction to the ADS, the BMS, the hydraulic braking system, and the MCU in the energy-saving control system for the assisted driving;

and

the control method of the energy-saving control system for the assisted driving of the electric vehicle comprises:

step S1: upon completion of power-on start-up and initialization of the electric vehicle, determining whether the electric vehicle enters an assisted driving mode after the driver confirms to enter an assisted driving mode, and performing step S2 if the electric vehicle enters the assisted driving mode, or performing energy recovery according to an original strategy if the electric vehicle does not enter the assisted driving mode;

step S2: after the electric vehicle enters the assisted driving mode, the ADS identifying and classifying the external environment data of the electric vehicle acquired by the exteroceptive sensor, and based thereon determining an external environment situation of the electric vehicle to obtain a determined external environment situation of the electric vehicle, and transmitting information about the determined external environment situation of the electric vehicle to the VCU;

step S3: after the electric vehicle enters the assisted driving mode, the ADS obtaining a first braking force distribution influence coefficient $a_1$ according to the driver information acquired by the proprioceptive sensor, and the BMS obtaining a second braking force distribution influence coefficient $a_2$ according to voltage and current information of the power battery acquired by the BMS, and sending the first braking force distribution influence coefficient $a_1$ and the second braking force distribution influence coefficient $a_2$ to the VCU;

step S4: the VCU receiving the first braking force distribution influence coefficient $a_1$ sent by the ADS and the second braking force distribution influence coefficient $a_2$ sent by the BMS, and obtaining a requested braking force f through polynomial fitting, wherein the requested braking force f is expressed as:

$$f = a_1 * f_{hydraulic} + a_2 * f_{motor}$$

wherein $f_{hydraulic}$ and $f_{motor}$ are information of a braking force map in an original braking force distribution; and

step S5: in the assisted driving mode, the ADS detecting according to the external environment information of the electric vehicle whether braking is required; when the braking is required, the VCU performing braking force distribution according to a required vehicle speed-based braking response calculation request and the braking force distribution influence weight coefficients $a_1$ and $a_2$; and when the braking is not required, the VCU performing coasting energy recovery according to vehicle information and external road information,

wherein step S3 specifically comprises the following steps:

step S31: after the electric vehicle enters the assisted driving mode, the ADS determining an age, a gender, and a mental state of a driver according to the driver information acquired by the proprioceptive sensor, performing perception fusion and classification, obtaining the first braking force distribution influence coefficient $a_1$, and sending the first braking force distribution influence coefficient $a_1$ to the VCU; and

step S32: after the electric vehicle enters the assisted driving mode, the BMS determining a driving habit of the driver and road smoothness information from the acquired voltage and current information according to a driving status of the electric vehicle, performing fitting to obtain the second braking force distribution influence coefficient $a_2$, and sending the second braking force distribution influence coefficient $a_2$ to the VCU.

**2.** The control method according to claim 1, **characterized in that**, the first braking force distribution influence coefficient satisfies $a_1 \in [0,1]$.

**3.** The control method according to claim 1, **characterized in that**, the second braking force distribution influence coefficient satisfies $a_2 \in [0,1]$.

**4.** The control method according to claim 1, **characterized in that**, the step S5 specifically comprises the following steps:

step S51: in the assisted driving mode, when the ADS determines according to the external environment information of the electric vehicle that the braking is required, the ADS sending the required vehicle speed to the VCU, and the VCU distributing hydraulic braking and motor braking according to the required vehicle speed-based braking response calculation request and the braking force distribution influence weight coefficients $a_1$ and $a_2$; and

step S52: in the assisted driving mode, when the ADS determines according to the external environment information of the electric vehicle that the braking is not required, the ADS performing the coasting energy recovery according to the vehicle information and the external road information, and the VCU making a judgment according to information from the ADS and information from the BMS, and sending a motor braking request to the MCU to perform the coasting energy recovery.

**5.** The control method according to claim 4, **characterized in that**, a precondition for the coasting energy recovery in the step S52 is: making a judgment according to a state of charge (SOC) of the power battery detected by the BMS.

**6.** The control method according to claim 5, **characterized in that**, braking energy recovery is performed based on the SOC of the power battery is determined according to following strategy:

when the SOC of the power battery is greater than or equal to 95%, no braking energy recovery is performed, i.e., the second brake force distribution influence coefficient $a_2 = 0$;

when the SOC of the power battery is greater than or equal to 80% and is less than 95%, the braking energy recovery is allowed restrictively, i.e., the second brake force distribution influence coefficient $a_2$ is (0.6 to 0.8); and

when the SOC of the power battery is less than 80%, the braking energy recovery is allowed, and the second brake force distribution coefficient $a_2$ is selected according to an actual weight.

**Patentansprüche**

**1.** Steuerungsverfahren eines energiesparenden Steuerungssystems für assistiertes Fahren eines Elektrofahrzeugs, wobei
das energiesparende Steuerungssystem für das assistierte Fahren des Elektrofahrzeugs umfasst:

einen Motor;

einen exterozeptiven Sensor, der dazu konfiguriert ist, externe Umgebungsdaten des Elektrofahrzeugs zu erfassen, wobei die externen Umgebungsdaten des Elektrofahrzeugs Fußgängerdaten, Fahrbahnmarkierungsdaten und Daten zum vorausfahrenden Fahrzeug umfassen;

einen propriozeptiven Sensor, der dazu konfiguriert ist, Fahrerinformationen zu erfassen;

ein Fahrerassistenzsystem (Assisted Driving System, ADS), das dazu konfiguriert ist, die von dem exterozeptiven Sensor erfassten externen Umgebungsdaten des Elektrofahrzeugs und die von dem propriozeptiven Sensor erfassten Fahrerinformationen zu verarbeiten;

eine Fahrzeugsteuereinheit (Vehicle Control Unit, VCU), die dazu konfiguriert ist, von dem ADS gesendete externe Umgebungsdaten zu empfangen und zu verarbeiten;

ein hydraulisches Bremssystem, das dazu konfiguriert ist, das Elektrofahrzeug mittels Hydraulikdruck zu bremsen;

eine Motorsteuereinheit (Motor Control Unit, MCU), die dazu konfiguriert ist, eine Drehmomentanforderung der VCU zu empfangen, den Motor zum Betrieb anzutreiben und elektrische Energie zurückzugewinnen, um zurückgewonnene elektrische Energie zu erhalten;

eine Antriebsbatterie, die dazu konfiguriert ist, das Elektrofahrzeug mit Energie zu versorgen und die zurückgewonnene elektrische Energie zu speichern; und

ein Batteriemanagementsystem (Battery Management System, BMS), das dazu konfiguriert ist, einen Zustand der Antriebsbatterie zu überwachen und aktuelle Informationen zu erfassen, wobei die VCU dazu konfiguriert ist, eine Steueranweisung an das ADS, das BMS, das hydraulische Bremssystem und die MCU in dem energiesparenden Steuerungssystem für das assistierte Fahren zu senden;
und wobei
das Steuerungsverfahren des energiesparenden Steuerungssystems für das assistierte Fahren des Elektrofahrzeugs umfasst:

Schritt S1: nach Abschluss des Einschaltvorgangs und der Initialisierung des Elektrofahrzeugs, Bestimmen, ob das Elektrofahrzeug in einen Fahrerassistenzmodus wechselt, nachdem der Fahrer den Wechsel in den Fahrerassistenzmodus bestätigt hat, und Ausführen von Schritt S2, wenn das Elektrofahrzeug in den Fahrerassistenzmodus wechselt, oder Ausführen einer Energierückgewinnung gemäß einer ursprünglichen Strategie, wenn das Elektrofahrzeug nicht in den Fahrerassistenzmodus wechselt;

Schritt S2: Identifizieren und Klassifizieren der von dem exterozeptiven Sensor erfassten externen Umgebungsdaten des Elektrofahrzeugs durch das ADS, nachdem das Elektrofahrzeug in den Fahrerassistenzmodus gewechselt ist, und Bestimmen einer externen Umgebungssituation des Elektrofahrzeugs basierend darauf, um eine bestimmte externe Umgebungssituation des Elektrofahrzeugs zu erhalten, und Übertragen von Informationen über die bestimmte externe Umgebungssituation des Elektrofahrzeugs an die VCU;

Schritt S3: Erhalten eines ersten Bremskraftverteilungs-Beeinflussungskoeffizienten $a_1$ durch das ADS gemäß den von dem propriozeptiven Sensor erfassten Fahrerinformationen, nachdem das Elektrofahrzeug in den Fahrerassistenzmodus gewechselt ist, und Erhalten eines zweiten Bremskraftverteilungs-Beeinflussungskoeffizienten $a_2$ durch das BMS gemäß den von dem BMS erfassten Spannungs- und Strominformationen der Antriebsbatterie, und Senden des ersten Bremskraftverteilungs-Beeinflussungskoeffizienten $a_1$ und des zweiten Bremskraftverteilungs-Beeinflussungskoeffizienten $a_2$ an die VCU;

Schritt S4: Empfangen des von dem ADS gesendeten ersten Bremskraftverteilungs-Beeinflussungskoeffizienten $a_1$ und des von dem BMS gesendeten zweiten Bremskraftverteilungs-Beeinflussungskoeffizienten $a_2$ durch die VCU, und Erhalten einer angeforderten Bremskraft f durch Polynomausgleichung, wobei die angeforderte Bremskraft f wie folgt ausgedrückt wird:

$$f = a_1 * f_{hydraulisch} + a_2 * f_{Motor}$$

wobei $f_{hydraulisch}$ und $f_{Motor}$ Informationen eines Bremskraftkennfelds in einer ursprünglichen Bremskraftverteilung sind; und

Schritt S5: im Fahrerassistenzmodus, Erfassen durch das ADS gemäß den externen Umgebungsinformationen des Elektrofahrzeugs, ob ein Bremsen erforderlich ist, wobei die VCU eine Bremskraftverteilung gemäß einer erforderlichen fahrzeuggeschwindigkeitsbasierten Bremsantwort-Berechnungsanfrage sowie den Bremskraftverteilungs-Beeinflussungskoeffizienten $a_1$ und $a_2$ durchführt, wenn das Bremsen erforderlich ist; und die VCU eine Schubbetriebs-Energierückgewinnung gemäß Fahrzeuginformationen und externen Straßeninformationen durchführt, wenn das Bremsen nicht erforderlich ist;

wobei Schritt S3 insbesondere die folgenden Schritte umfasst:

Schritt S31: Bestimmen von Alter, Geschlecht und mentalem Zustand eines Fahrers durch das ADS gemäß den von dem propriozeptiven Sensor erfassten Fahrerinformationen, nachdem das Elektrofahrzeug in den Fahrerassistenzmodus gewechselt ist, und Durchführen einer Wahrnehmungsfusion und -klassifizierung, Ermitteln des ersten Bremskraftverteilungs-Beeinflussungskoeffizienten $a_1$ und Senden des ersten Bremskraftverteilungs-Beeinflussungskoeffizienten $a_1$ an die VCU; und

Schritt S32: Bestimmen von Fahrgewohnheit des Fahrers und von Informationen über die Fahrbahnbeschaffenheit aus den erfassten Spannungs- und Strominformationen durch das BMS gemäß einem Fahrzustand des Elektrofahrzeugs, nachdem das Elektrofahrzeug in den Fahrerassistenzmodus gewechselt ist, und Durchführen einer Ausgleichung, um den zweiten Bremskraftverteilungs-Beeinflussungskoeffizienten $a_2$ zu erhalten, und Senden des zweiten Bremskraftverteilungs-Beeinflussungskoeffizienten $a_2$ an die VCU.

2. Steuerungsverfahren nach Anspruch 1, **dadurch gekennzeichnet, dass** für den ersten Bremskraftverteilungs-Beeinflussungskoeffizienten gilt: $a_1 \in [0,1]$.

3. Steuerungsverfahren nach Anspruch 1, **dadurch gekennzeichnet, dass** für den zweiten Bremskraftverteilungs-Beeinflussungskoeffizienten gilt: $a_2 \in [0,1]$.

4. Steuerungsverfahren nach Anspruch 1, **dadurch**

**gekennzeichnet, dass** der Schritt S5 insbesondere die folgenden Schritte umfasst:

Schritt S51: im Fahrerassistenzmodus, wenn das ADS gemäß den externen Umgebungsinformationen des Elektrofahrzeugs bestimmt, dass das Bremsen erforderlich ist, Senden der erforderlichen Fahrzeuggeschwindigkeit durch das ADS an die VCU, und Verteilen einer hydraulischen Bremsung und einer Motorbremsung durch die VCU gemäß der erforderlichen fahrzeuggeschwindigkeitsbasierten Bremsantwort-Berechnungsanfrage sowie den Bremskraftverteilungs-Beeinflussungskoeffizienten $a_1$ und $a_2$; und

Schritt S52: im Fahrerassistenzmodus, wenn das ADS gemäß den externen Umgebungsinformationen des Elektrofahrzeugs bestimmt, dass das Bremsen nicht erforderlich ist, Durchführen der Schubbetriebs-Energierückgewinnung durch das ADS gemäß den Fahrzeuginformationen und den externen Straßeninformationen, und Durchführen einer Beurteilung durch die VCU gemäß Informationen von dem ADS und Informationen von dem BMS und Senden einer Motorbremsanforderung an die MCU, um die Schubbetriebs-Energierückgewinnung durchzuführen.

5. Steuerungsverfahren nach Anspruch 4, **dadurch gekennzeichnet, dass** eine Voraussetzung für die Schubbetriebs-Energierückgewinnung in Schritt S52 ist: Durchführen einer Beurteilung gemäß einem von dem BMS erfassten Ladezustand (State of Charge, SOC) der Antriebsbatterie.

6. Steuerungsverfahren nach Anspruch 5, **dadurch gekennzeichnet, dass** die Energierückgewinnung beim Bremsen basierend auf dem SOC der Antriebsbatterie gemäß der folgenden Strategie bestimmt wird:

keine Energierückgewinnung beim Bremsen durchgeführt wird, wenn der SOC der Antriebsbatterie größer oder gleich 95 % ist, d. h. der zweite Bremskraftverteilungs-Beeinflussungskoeffizient $a_2 = 0$ ist;

die Energierückgewinnung beim Bremsen eingeschränkt zugelassen wird, wenn der SOC der Antriebsbatterie größer oder gleich 80 % und kleiner als 95 % ist, d. h. der zweite Bremskraftverteilungs-Beeinflussungskoeffizient $a_2$ im Bereich von 0,6 bis 0,8 beträgt; und

die Energierückgewinnung beim Bremsen zugelassen wird, wenn der SOC der Antriebsbatterie kleiner als 80 % ist, und der zweite Bremskraftverteilungs-Beeinflussungskoeffizient $a_2$ gemäß einer tatsächlichen Gewichtung ausgewählt wird.

## Revendications

1. Procédé de commande d'un système de commende d'économie d'énergie pour une conduite assistée d'un véhicule électrique, le système de commende d'économie d'énergie pour la conduite assistée du véhicule électrique comprend :

un moteur ;

un capteur extéroceptif, configuré pour acquérir des données d'un environnement extérieur du véhicule électrique, dans lequel les données de l'environnement extérieur du véhicule électrique incluent des données de piétons, des données de marquage de voies et des données de véhicule précédent ;

un capteur proprioceptif, configuré pour acquérir des informations de conducteur ;

un système de conduite assistée (Assisted Driving System, ADS), configuré pour traiter les données de l'environnement extérieur du véhicule électrique acquises par le capteur extéroceptif et les informations de conducteur acquises par le capteur proprioceptif ;

une unité de commande de véhicule (Vehicle Control Unit, VCU), configurée pour recevoir et traiter des informations sur l'environnement extérieur envoyées par l'ADS ;

un système de freinage hydraulique, configuré pour freiner le véhicule électrique sous l'action d'une pression hydraulique ;

une unité de commande de moteur (Motor Control Unit, MCU), configurée pour recevoir une demande de couple de la VCU, entraîner le moteur à fonctionner et récupérer de l'énergie électrique pour obtenir une énergie électrique récupérée;

une batterie d'alimentation, configurée pour alimenter le véhicule électrique et stocker l'énergie électrique récupérée; et

un système de gestion de batterie (Battery Management System, BMS), configuré pour surveiller un état de la batterie d'alimentation et acquérir des informations de courant ; dans lequel la VCU est configurée pour envoyer une instruction de commande vers l'ADS, le BMS, le système de freinage hydraulique et la MCU dans le système de commende d'économie d'énergie pour la conduite assistée;
et

le procédé de commande du système de commende d'économie d'énergie pour la conduite assistée du véhicule électrique comprend :

étape S1 : une fois un démarrage sous tension et une initialisation du véhicule électrique complétés, déterminer si le véhicule électrique entre en mode de conduite assistée après que le conducteur ait confirmé d'avoir entrée en mode de conduite assistée, et exécuter l'étape S2 si le véhicule électrique entre en mode de conduite assistée, ou effectuer une récupération d'énergie selon une stratégie d'origine si le véhicule électrique n'entre pas en mode de conduite assistée ;

étape S2 : après que le véhicule électrique entre en mode de conduite assistée, identifier et classer, par l'ADS, les données de l'environnement extérieur du véhicule électrique acquises par le capteur exteroceptif, et sur la base de celles-ci, déterminer une situation de l'environnement extérieur du véhicule électrique pour obtenir une situation déterminée de l'environnement extérieur du véhicule électrique, et transmettre des informations sur la situation déterminée de l'environnement extérieur du véhicule électrique vers la VCU;

étape S3: après que le véhicule électrique entre en mode de conduite assistée, obtenir, par l'ADS, un premier coefficient d'influence de la distribution de la force de freinage $a_1$ en fonction des informations de conducteur acquises par le capteur proprocetif, et obtenir, par l'BMS, un second coefficient d'influence de la distribution de la force de freinage $a_2$ en fonction des informations de tension et de courant de la batterie d'alimentation acquises par l'BMS, et envoyer le premier coefficient d'influence de la distribution de la force de freinage $a_1$ et le second coefficient d'influence de la distribution de la force de freinage $a_2$ vers la VCU;

étape S4: recevoir, par la VCU, le premier coefficient d'influence de la distribution de la force de freinage $a_1$ envoyé par l'ADS et le second coefficient d'influence de la distribution de la force de freinage $a_2$ envoyé par l'BMS, et obtenir une force de freinage f demandée à l'aide d'un ajustement polynomial, la force de freinage f demandée étant exprimée comme suit :

$$f = a_1 * f_{hydraulique} + a_2 * f_{moteur}$$

où $f_{hydraulique}$ et $f_{moteur}$ sont des informations sur une carte de force de freinage dans une distribution de force de freinage originale; et

étape S5: en mode de conduite assistée, détecter, le ADS, en fonction des informations sur l'environnement extérieur du véhicule électrique, si un freinage est demandé ;

lorsque le freinage est demandé, effectuer, par la VCU, une distribution de la force de freinage en fonction d'une demande de calcul de réponse de freinage sur la base de la vitesse du véhicule demandée et des coefficients de poids d'influence de la distribution de la force de freinage $a_1$ et $a_2$; et

lorsque le freinage n'est pas demandé, la VCU effectue une récupération d'énergie en roue libre en fonction des informations de véhicule et des informations routières extérieures,

dans lequel l'étape S3 comprend en particulier les étapes suivantes:

> étape S31: après que le véhicule électrique entre en mode de conduite assistée, déterminer, par le ADS, un âge, un sexe et un état mental d'un conducteur en fonction des informations de conducteur acquises par le capteur proprioceptif, effectuer une fusion et une classification de perceptions, obtenir le premier coefficient d'influence de la distribution de la force de freinage $a_1$, et envoyer le premier coefficient d'influence de la distribution de la force de freinage $a_1$ vers la VCU; et
>
> étape S32: après que le véhicule électrique entre en mode de conduite assistée, déterminer, par le BMS, une habitude de conduite du conducteur et des informations de régularité routière à partir des informations de tension et de courant acquises en fonction d'un état de conduite du véhicule électrique, effectuer un ajustement pour obtenir le second coefficient d'influence de la distribution de la force de freinage $a_2$, et envoyer le second coefficient d'influence de la distribution de la force de freinage $a_2$ vers la VCU.

2. Procédé de commande selon la revendication 1, **caractérisé en ce que** le premier coefficient d'influence de la distribution de la force de freinage satisfait $a_1 \in [0, 1]$.

3. Procédé de commande selon la revendication 1, **caractérisé en ce que** le second coefficient d'influence de la distribution de la force de freinage satisfait $a_2 \in [0, 1]$.

4. Procédé de commande selon la revendication 1, **caractérisé en ce que** l'étape S5 comprend en particulier les étapes suivantes:

étape S51: en mode de conduite assistée, lorsque l'ADS détermine, en fonction des informations sur l'environnement extérieur du véhicule électrique, que le freinage est demandé, envoyer, par l'ADS, la vitesse de véhicule demandée vers la VCU, et distribuer, par la VCU, un freinage hydraulique et un freinage de moteur en fonction de la demande de calcul de réponse de freinage sur la base de la vitesse du véhicule demandée et des coefficients de poids d'influence de la distribution de la force de freinage $a_1$ et $a_2$; et

étape S52: en mode de conduite assistée, lorsque l'ADS détermine, en fonction des informations sur l'environnement extérieur du véhicule électrique, que le freinage n'est pas demandé, effectuer, par l'ADS, la récupération d'énergie en roue libre en fonction des informations de véhicule et des informations routières extérieures, et effectuer, par la VCU, un jugement, en fonction des informations provenant de l'ADS et des informations provenant de l'BMS, et envoyer une demande de freinage de moteur vers la MCU pour effectuer la récupération d'énergie en roue libre.

5. Procédé de commande selon la revendication 4, **caractérisé en ce qu'**une condition préalable pour la récupération d'énergie en roue libre à l'étape S52 consiste à effectuer un jugement en fonction d'un état de recharge (State of Charge, SOC) de la batterie la plus récente détectée par le BMS.

6. Procédé de commande selon la revendication 5, **caractérisé en ce que** la récupération d'énergie de freinage est effectuée sur la base du SOC de la batterie d'alimentation déterminé selon une stratégie suivante:

lorsque le SOC de la batterie d'alimentation est supérieur ou égal à 95 %, aucune récupération d'énergie de freinage n'est effectuée, c'est-à-dire que le second coefficient d'influence de la distribution de force de freinage $a_2 = 0$;

lorsque le SOC de la batterie d'alimentation est supérieur ou égal à 80 % et inférieur à 95 %, la récupération d'énergie de freinage est autorisée de manière restrictive, c'est-à-dire que le second coefficient d'influence de la distribution de force de freinage $a_2$ est compris entre 0,6 et 0,8, et

lorsque le SOC de la batterie d'alimentation est inférieur à 80 %, la récupération d'énergie de freinage est autorisée et le second coefficient de la distribution de force de freinage $a_2$ est sélec-

tionné en fonction d'un poids réel.

FIG. 1

```
                        ┌──────────┐
                        │  Start   │
                        └──────────┘
                             │
                             ▼
                        ╱─────────╲
                       ╱ Power-on and ╲
                      ╱ initialization of the ╲──┐
                      ╲  vehicle are  ╱         │
                       ╲ completed. ╱           │
                        ╲─────────╱             │
                             │◄─────────────────┘
                             ▼
                        ╱─────────╲
                       ╱ Has the vehicle ╲──────┐
                      ╱ entered an assisted ╲    │
                      ╲  driving model? ╱        │
                       ╲─────────╱               │
                             │◄─────────────────┘
```

| The ADS processes information acquired by the proprioceptive sensor to obtain a weight coefficient $a_1$. | The ADS identifies and classifies information acquired by the exteroceptive sensor and transmits the information to the VCU. | The BMS obtains a road condition weight coefficient $a_2$ according to a vehicle driving status and a battery discharge status. |

The VCU processes the vehicle information and the sensed information.

The VCU obtains a braking force through polynomial fitting: $f=a_1 \ast f_{hydraulic}+a_2 \ast f_{motor}$

The ADS detects whether braking is required. — N

| The ADS outputs a required vehicle speed v1 when detecting that braking is required according to an environmental status. | The VCU distributes coasting braking according to the information from the ADS and the information from the BMS to perform energy recovery. |

The VCU distributes motor braking and hydraulic braking according to a required vehicle speed calculation braking response request and a braking force distribution formula, and transmits to the MCU and the ESC for braking and energy recovery.

End

FIG. 2

```
                          ┌──────────┐
                          │  Start   │
                          └────┬─────┘
                               │
                               ▼
                    ┌──────────────────────┐
                    │ When         energy   │
                    │ recovery is to be     │
                    │ performed, an SOC     │
                    │ is determined in real │
                    │ time.                 │
                    └──────────┬───────────┘
                               │
                               ▼
```

Start

When energy recovery is to be performed, an SOC is determined in real time.

SOC<80%          ◄─N─   80%≤SOC<95%   ─N─►   SOC≥95%

Y                       Y                     Y

Braking energy recovery is allowed, i.e., $a_2$ is selected according to an actual weight.

Braking energy recovery is performed according to $a_2*(0.6$ to $0.8)$, which is specifically selected based on experiments.

Braking energy recovery is not allowed, i.e., $a_2=0$.

End

FIG. 3

**REFERENCES CITED IN THE DESCRIPTION**

**Patent documents cited in the description**

- JP 2004216997 A
- CN 110920405 B
- US 2015258897 A1
- US 9815373 B2
- CN 109552289 B
- CN 112572157 A
- JP 6756519 B